# EUROPEAN PATENT SPECIFICATION

(11) **EP 2 853 518 B1**
(45) Date of publication and mention of the grant of the patent: **02.01.2019**
(21) Application number: 13193584.3
(22) Date of filing: 20.11.2013
(51) Int. Cl.: C03C 17/36

(54) **A low-e coated glass**
Low-e-beschichtetes Glas
Verre à faible émissivité

(30) Priority: 26.09.2013 TR 201311280
(43) Date of publication of application: 01.04.2015
(73) Proprietor: Türkiye Sise Ve Cam Fabrikalari A.S., 34947 Tuzla (TR)
(72) Inventor: Parlar, Hüseyin, 34330 ISTANBUL (TR); Türküz, Seniz, 34330 ISTANBUL (TR)
(74) Representative: Kaya, Erdem

(56) References cited:
- EP-A1- 1 182 175
- EP-A1- 2 444 381
- EP-B1- 1 446 364
- WO-A2-2005/005333

## Description

### TECHNICAL FIELD

The present invention relates to a solar low-e coated glass which can be tempered and which is coated by pluralities of metal, metal oxide and nitride layers by utilizing sputtering method in vacuum.

### PRIOR ART

The most important optical properties for flat glasses are the visible transmittance and solar transmittance. Since the optical properties of the glass changes in inverse proportion with the thickness of glass, these two transmittance values change in proportion to thickness. For instance, the visible transmittance of glass with thickness of 4 mm prepared from the same mixture is equal to 89 % and the solar transmittance is equal to 82 %, and the visible transmittance of the same glass with thickness of 8 mm can be 87 % and the solar transmittance can be 75 %. As the glass thickness increases, the visible transmittance and solar transmittance decrease.

Another parameter affecting the optical properties of glasses is the coating application applied to the surface thereof. One of the coating methods is the sputtering method. This method is based on the principle of accelerating and accumulating sputtered atomic sized particles towards the glass surface by means of momentum transfer from a metal and/or ceramic target with the help of the plasma of an inert gas and in vacuum. This method is a frequently used method in the production of architectural coatings having low emission property.

The international patent application WO 2005/005333 A2 describes a coated glass substrate as window in the context of architectural windows, insulating glass (IG) window units and automotive windows. This glass substrate has a low-E coating with the following arrangement of layers: Glass/TiO₂/Si₃N₄/Cr/Ag/Cr/Si₃N₄.

In the invention EP0646551, a layered coating is described which is applied onto the flat glass with a thickness of 2.5 mm - 3.5 mm by means of the sputtering method. The layer arrangement used in said invention is in the form of SiNx/SiOxNy / Ni:Cr / Ag / Ni:Cr / SiNx/SiOxNy outwards from the glass, and the layer thicknesses are equal to 35-45 nm / 2 nm / 5-12 nm / 0.7 nm /45-55 nm respectively. The visible transmittance value of said coating measured according to ASTM 1991 after the thermal process is equal to 76-78 %; surface resistance (Rs) is lower than 12 ohms/sq; and the emission is approximately 0.12.

In the invention EP2281787. a coating is described having a layer structure SnO₂ / Cr / Ag / Cr / SnO₂ respectively outwardly from the glass on the glass with a thickness range between 2.2 mm - 6 mm in vacuum by means of the sputtering method. The visible transmittance of said coated glass after thermal process is between 50-80 %; the surface resistance is 5 ohm/sq at maximum and the appearance thereof is neutral.

### BRIEF DESCRIPTION OF THE INVENTION

The present invention relates to a double-glass unit having a low-e coated glass which is coated by means of the sputtering method, for eliminating the above mentioned disadvantages and for bringing new advantages to the related technical field.

The main object of the present invention is to provide a solar low-e coated glass which can be tempered.

In order to realize all of the abovementioned objects and the objects which are to be deducted from the detailed description below, the present invention is a double-glass unit having a coated glass where a low-e coating is applied comprising pluralities of metal, metal oxide and metal nitride by utilizing sputtering method in vacuum. Accordingly, the present invention is characterized by consisting of the following layers of said low-e coating accumulated on the glass and whose thickness range is given:

| **Layers (material)** | | **Thickness, nm** |
|---|---|---|
| **Type** | **Chemical formula** | |
| **Glass** | **Base plate** | |
| **Sub-oxide** | Sub-oxide | 20-40 |
| **Silicium nitride / Silicium oxi-nitride** | SiNx/SiOxNy | 5-15 |
| **Chrome** | Cr | 1-4 |
| **Silver** | Ag | 12-18 |
| **Chrome** | Cr | 1-4 |
| **Silicium nitride / Silicium oxi-nitride** | SiNx/SiOxNy | 45-65 |

and characterized by comprising at least one of zinc tin oxide, zinc, tin or titanium oxide as said sub-oxide.

In a preferred embodiment of the subject matter invention, zinc tin oxide is used as the sub-oxide.

In another preferred embodiment of the subject matter invention, the Cr/(SiNx/SiOxNy) structure is used as a whole such that SiNx/SiOxNy is further than the glass surface said low-e coating is applied thereto. Thus, the mechanical stability of the coating is preserved.

In another preferred embodiment of the subject matter invention, the coating layers are used as a whole in the sequence of (SiNx/SiOxNy)/Cr/Ag/Cr/(SiNx/SiOxNy). Thus, the thermal process stability of silver is preserved.

In another preferred embodiment of the subject matter invention, after the tempering process of said glass, the visible transmittance value of the double-glass is 61 %.

In another preferred embodiment of the subject matter invention, after the tempering process of said glass, the total solar transmittance value of the double-glass is 43 %.

In another preferred embodiment of the subject matter invention, said coated glass has a maximum thickness of 6 mm.

In another preferred embodiment of the subject matter invention, after the tempering process of said glass, the U value of the double-glass is 1.21 [W/(m2.K)].

In another preferred embodiment of the subject matter invention, said sub-oxide thickness is in the range of 29-35 nm.

In another preferred embodiment of the subject matter invention, said silicium nitride / silicium oxi-nitride thickness provided in the vicinity of zinc tin oxide is in the range of 8-12 nm.

In another preferred embodiment of the subject matter invention, said chrome thicknesses are between 1-3 nm.

In another preferred embodiment of the subject matter invention, said silver thicknesses are between 13-16 nm.

In another preferred embodiment of the subject matter invention, the thickness of silicium nitride / silicium oxi-nitride thickness, which is the final layer, is between 50-60 nm.

In order to realize all of the abovementioned objects and the objects which are to be deducted from the detailed description below, the present invention is a low-e coating which can be tempered comprising pluralities of metal, metal oxide and metal nitride layers and applied onto a glass surface by utilizing sputtering method in vacuum. Accordingly, the present invention is characterized by consisting of the following layers accumulated on the glass and whose thickness range is given:

| **Layers (material)** | | **Thickness, nm** |
|---|---|---|
| **Type** | **Chemical formula** | |
| **Glass** | **Base Plate** | |
| **Sub-oxide** | Sub-oxide | 20-40 |
| **Silicium nitride / Silicium oxi-nitride** | SiNx/SiOxNy | 5-15 |
| **Chrome** | Cr | 1-4 |
| **Silver** | Ag | 12-18 |
| **Chrome** | Cr | 1-4 |
| **Silicium nitride / Silicium oxi-nitride** | SiNx/SiOxNy | 45-65 |

and characterized by consisting of at least one of zinc tin oxide, zinc, tin or titanium oxide as said sub-oxide.

In another preferred embodiment of the subject matter invention, zinc tin oxide is used as the sub-oxide.

In another preferred embodiment of the subject matter invention, the Cr(SiNx/SiOxNy) structure is used as a whole such that SiNx/SiOxNy is further than the glass surface said low-e coating is applied thereto.

In another preferred embodiment of the subject matter invention, the coating layers are used as a whole in the sequence of (SiNx/SiOxNy)/Cr/Ag/Cr/(SiNx/SiOxNy).

### BRIEF DESCRIPTION OF THE FIGURES

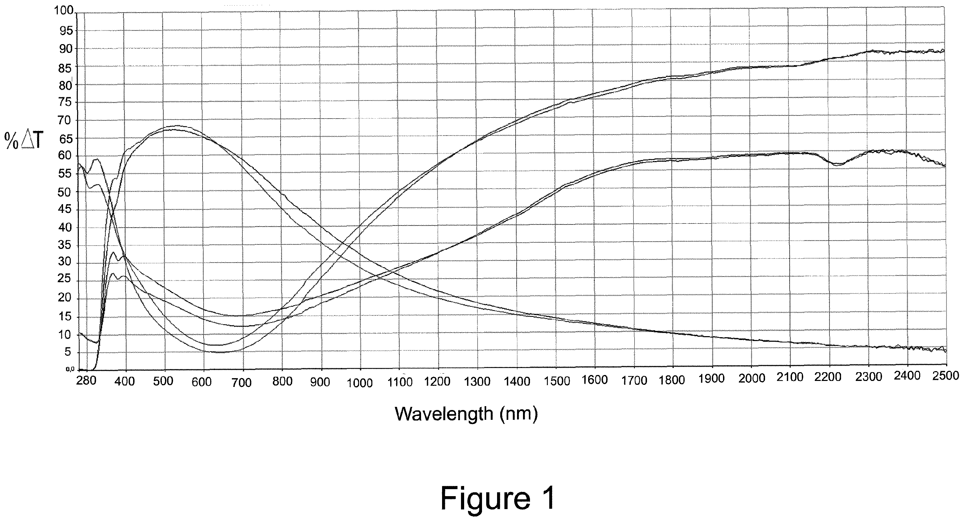

In Figure 1, a graphic is given which illustrates the visible region (380 nm - 780 nm) and close infrared transmittance (780 nm - 2.5 µm) of the subject matter coating.

### THE DETAILED DESCRIPTION OF THE INVENTION

In this detailed description, the subject matter low emission coated glass is explained with references to examples without forming any restrictive effect in order to make the subject more understandable.

The sputter method, used in production of low emission architectural glasses, has an important place. The present invention generally relates to solar low-e 60/40 coated glasses, used as the thermal and light isolation glasses in architectural systems, relates to the ingredient of said coating and the application of said coating.

In the present invention, a coating is developed comprising pluralities of metal, metal oxide and metal nitride layer on the glass surface by utilizing the sputtering method in order to obtain a low-emission (hereafter it will be called low-e) coated glass which can be tempered and having highly visible transmittance for being applied to a glass surface. Said layers are accumulated in vacuum onto each other in sequence. Prior to coating of glasses, the coating process begins after application of automatic washing and air jet.

With reference to Figure 1, in the subject matter coating, the layer transmitting the visible region in a better manner and reflecting thermal radiation in infrared spectrum (transmitting less of the thermal radiation) and determining the characteristic of the curve illustrated in Figure 1 is the silver layer and the emission of said silver layer is low. Since the silver layer, having high visible transmittance in the visible region and having high reflectivity in the infrared region, is very prone to oxidation and since said silver layer is not very adhesive, a barrier layer should be used which is resistant to oxidation, thermal process and mechanical effects during layer sequencing for protecting silver layer against external effects. In the present invention, chrome is used as the barrier layer and SiNx/SiOxNy is used in the vicinity of chrome. Chrome prepares a floor providing firm adsorption to silver and protects the silver against negative effects of the process during accumulation of the layer provided after silver and it also supports tempering of the coated glass thanks to the high thermal stability thereof. The thermal process stability of chrome draws attraction since there is no chrome diffusion to the silver layer in the tempered product and it is known that different materials for instance like nickel diffuses silver during the thermal process. Chrome, provided under the silver layer, forms a suitable "seed layer" during coating, and provides firm orientation of silver and thus decreases emission after the tempering process. SiNx/SiOxNy layers provided under and above the Cr's around the silver prevent oxygen reach even to the Cr layers.

Oxide, metal, metal oxide and nitride layers are coated onto each other in a suitable manner, and it is possible to load neutrality and color properties and the desired thermal and light abilities to the glass. The refractive index of ZnSnOx is 2.05 and provides anti-reflective property on SiNx/SiOxNy layer whose refractive index changes between 2.2 - 2.4 and decreases glass side reflection value and increases visible region transmittance. Moreover, ZnSnOx is a material whose adhesion to the glass surface is high and the thermal stability thereof is determined by heating only ZnSnOx. The thermal stability of SiNx/SiOxNy is substantially high and adsorbs on to the glass and other layers in a very firm manner. Instead of zinc tin oxide, zinc oxide tin oxide or titanium oxide can be used.

During the coating process, metallic targets are used, and the plasma is obtained in argon gas, nitrogen and oxygen environment. The glass surface is coated by utilizing argon gas and nitrogen gas for SiNx/SiOxNy coating layer; the glass surface is coated by means of reactive sputtering by utilizing oxygen gas and argon gas for ZnSnOx coating layer; and the glass surface is coated by means of sputtering method in metallic mode by utilizing only argon gas for Cr and Ag coating layer. During the coating process, the magnets are adjusted so as to provide the maximum magnetic field and so as to contact the target plate.

In ZnSnOx coating, the oxygen flow rate is determined according to the minimum plasma voltage and the amount of oxygen gas is not determined depending on the hysteresis. Since there is no hysteresis in SiNx/SiOxNy, only SiNx/SiOxNy is coated and N₂ gas flow rate is used having minimum absorption. In reactive coatings, the process is provided by means of oxidation and by means of nitriding voltage control.

4 exemplary studies are realized for improving the most ideal solar low-e 60/40 arrangement, which can be tempered, in terms of the production easiness and in terms of optic properties.

### Comparative Example 1:

In the study realized in Example 1, zinc tin oxide is placed to the vicinity of chrome which is close to the outer environment in the arrangement of coating layer applied to the glass surface.

**Table-1.1: Example 1 coating layer arrangement**

| **Layers (material)** | | **Thickness, nm** |
|---|---|---|
| **Type** | **Chemical formula** | |
| **Glass** | **Base Plate** | |
| **Zinc tin oxide** | ZnSnOx | 32 |
| **Silicium nitride** / **Silicium oxi-nitride** | SiNx/SiOxNy | 10 |
| **Chrome** | Cr | 2 |
| **Silver** | Ag | 14,5 |
| **Chrome** | Cr | 2 |
| **Zinc tin oxide** | ZnSnOx | 10 |
| **Silicium nitride** / **Silicium oxi-nitride** | SiNx/SiOxNy | 50 |

In this study realized by positioning zinc tin oxide to the vicinity of chrome, it is observed that a particular sensitivity is occurring in the coating as a result of bringing the zinc tin oxide and chrome side by side and it is observed that the coating does not resist to the tempering process. Therefore, optic measurements cannot be realized. In order to eliminate the sensitivity occurring as a result of bringing zinc tin oxide and chrome side by side, the need for use of an intermediate layer between zinc tin oxide and chrome occurs.

The environment and coating parameters during coating of the abovementioned layers to the glass surface are given in Table 1.2.

**Table 1.2: Coating parameters**

| | **Power: kW** | **Ar: sccm** | **O2:sccm** | **N2:sccm** | **Speed: m/min** | **Number of Passages** |
|---|---|---|---|---|---|---|
| **ZnSnOx** | 1,7 | 30 | 60 | - | 1,98 | 4 |
| **SiNx/SiOxNy** | 1 | 50 | - | 20 | 0,62 | 1 |
| **Cr** | 0,4 | 50 | - | - | 2 | 1 |
| **Ag** | 0,53 | 50 | - | - | 2 | 1 |
| **Cr** | 0,4 | 50 | - | - | 2 | 1 |
| **ZnSnOx** | 1,7 | 30 | 60 | - | 1,5 | 1 |
| **SiNx/SiOxNy** | 1 | 50 | - | 20 | 0,62 | 5 |

### Comparative Example 2:

In the study realized in Example 2, in order to provide tempering resistance for the coated glass applied to the glass surface, a new structure, where silicium nitride / silicium oxi-nitride is provided as the barrier layer, is developed between the zinc tin oxide and chrome. In this case, the layer arrangement is as in Table 2.1.

**Table-2.1: Example 2 coating layer arrangement**

| **Layers (material)** | | **Thickness, nm** |
|---|---|---|
| **Type** | **Chemical formula** | |
| **Glass** | **Base Plate** | |
| **Zinc tin oxide** | ZnSnOx | 32 |
| **Silicium nitride / Silicium oxi-nitride** | SiNx/SiOxNy | 10 |
| **Chrome** | Cr | 2 |
| **Silver** | Ag | 14,5 |
| **Chrome** | Cr | 2 |
| **Silicium nitride** / **Silicium oxi-nitride** | SiNx/SiOxNy | 10 |
| **Zinc tin oxide** | ZnSnOx | 32 |
| **Silicium nitride / Silicium oxi-nitride** | SiNx/SiOxNy | 10 |

In this application, a solar low-e coated glass is obtained which can be tempered. However, it is observed that the mechanical resistance of said layer arrangement is not substantial prior to tempering and after tempering. Moreover, the ZnSnOx layer placed under the final layer leads to gas contamination in case there is not sufficient gas isolation between the ZnSnOx and SiNx/SiOxNy targets, and the materials are affected mutually.

The accumulation parameters of the abovementioned layers are given in Table 2.2.

**Table 2.2: Coating parameters**

| | **Power: kW** | **Ar: sccm** | **O2:sccm** | **N2:sccm** | **Speed: m/min** | **Number of passages** |
|---|---|---|---|---|---|---|
| **ZnSnOx** | 1,7 | 15 | 44 | - | 13 | 3 |
| **SiNx/SiOxNy** | 1 | 15 | - | 16 | 0,43 | 1 |
| **Cr** | 0,4 | 50 | - | - | 2 | 1 |
| **Ag** | 0,53 | 50 | - | - | 2 | 1 |
| **Cr** | 0,4 | 50 | - | - | 2 | 1 |
| **SiNx/SiOxNy** | 1 | 15 | - | 16 | 0,43 | 1 |
| **ZnSnOx** | 1,7 | 15 | 44 | - | 1,3 | 3 |
| **SiNx/SiOxNy** | 1 | 15 | - | 16 | 0,43 | 1 |

The properties of the coated glass having the layer arrangement as in Table 2.1 such that the coating is placed on the second when ranged from the external side towards the inner side, for the 6+16ar-air+6 mm configuration prior to tempering and after tempering are given in Table 2.3.

**Table-2.3: The light and thermal performance values and color parameters for the 6+16ar-air+6 (#2) configuration of Example 2 structure prior to tempering and after tempering**

| | **Prior to tempering** | **After tempering** |
|---|---|---|
| **U- value** | 1,24 [W/(m2.K)] | 1,22 [W/(m2.K)] |
| **Visible region light Transmittance (%)** | 61 | 60,5 |
| **Total Solar Power Transmittance (%)** | 46 | 45 |
| **UV Transmittance (%)** | 17 | 20 |
| **Ta** | -3,45 | -3,87 |
| **Tb** | 2,28 | 2,16 |
| **Ru,a** | -0,48 | 0,31 |
| **Ru,b** | -13,40 | -15,00 |

The properties of the coated single glass having the layer arrangement in Table 2.1 prior to tempering and after tempering are given in Table 2.4.

**Table 2.4: Optic performance values and color parameters of the coated single glass with thickness of 6 mm**

| | **Prior to Tempering** | **After Tempering** |
|---|---|---|
| **Visible region light Transmittance (%)** | 69 | 68 |
| **Solar Transmittance (%)** | 47 | 46 |
| **UV Transmittance (%)** | 22 | 26 |
| **Ta** | -3,45 | -3,87 |
| **Tb** | 2,28 | 2,16 |
| **Ru,a** | -0,48 | -0,31 |
| **Ru,b** | -13,40 | -15 |

### Comparative Example 3:

In the study realized in Example 3, in order to improve mechanical resistance prior to tempering, ZnSnOx layer is added as the final layer in the coating layer arrangement applied to the glass surface.

**Table-3.1: Example 3 coating layer arrangement**

| **Layers (material)** | | **Thickness, nm** |
|---|---|---|
| **Type** | **Chemical formula** | |
| **Glass** | **Base Plate** | |
| **Zinc tin oxide** | ZnSnOx | 32 |
| **Silicium nitride / Silicium oxi-nitride** | SiNx/SiOxNy | 10 |
| **Chrome** | Cr | 2 |
| **Silver** | Ag | 14,5 |
| **Chrome** | Cr | 2 |
| **Silicium nitride / Silicium oxi-nitride** | SiNx/SiOxNy | 10 |
| **Zinc tin oxide** | ZnSnOx | 25 |
| **Silicium nitride / Silicium oxi-nitride** | SiNx/SiOxNy | 10 |
| **Zinc tin oxide** | ZnSnOx | 6,5 |

The accumulation parameters of the abovementioned layers are given in Table 3.2.

**Table 3.2: Coating parameters**

| | **Power: kW** | **Ar: sccm** | **O2:sccm** | **N2:sccm** | **Speed: m/min** | **Number of passages** |
|---|---|---|---|---|---|---|
| **ZnSnOx** | 1,7 | 28 | 54 | | 1,25 | 3 |
| **SiNx/SiOxNy** | 1 | 50 | - | 35 | 0,35 | 1 |
| **Cr** | 0,18 | 30 | - | - | 2 | 1 |
| **Ag** | 0,73 | 50 | - | - | 2 | 1 |
| **Cr** | 0,18 | 30 | - | - | 2 | 1 |
| **SiNx/SiOxNy** | 1 | 50 | - | 35 | 0,35 | 1 |
| **ZnSnOx** | 1,7 | 28 | 54 | | 1,62 | 3 |
| **SiNx/SiOxNy** | 1 | 50 | - | 35 | 0,35 | 1 |
| **ZnSnOx** | 1,7 | 28 | 54 | | 2 | 1 |

The properties of the coated glass having the layer arrangement as in Table 3.1 such that the coating is placed on the second surface when ranged from the external side towards the inner side for the 6+16ar-air+6 mm configuration prior to tempering and after tempering are given in Table 3.2.

**Table-3.3: Light and thermal performance values and color parameters for the 6+16ar-air+6 (#2) configuration of Example 3 structure prior to tempering and after tempering**

| | **Prior to tempering** | **After tempering** |
|---|---|---|
| **U- value** | 1.24 [W/(m2.K)] | 1.17 [W/(m2.K)] |
| **Visible region light Transmittance (%)** | 61 | 61 |
| **Total Solar Power Transmittance (%)** | 45 | 44 |
| **UV Transmittance (%)** | 17 | 24 |
| **Ta** | -3,85 | -4,17 |
| **Tb** | 4,45 | -0,44 |
| **Ru,a** | 0,84 | 2,97 |
| **Ru,b** | -14,43 | -12,38 |

As given in Table 3.1, the mechanical resistance glass, the coating with the layer arrangement is applied thereto, is increased prior to tempering. However, after the tempering process, regional haziness occurs on the surface and the tempering quality decreases.

The properties of the coated single glass, having layer arrangement as in Table 3.1, prior to tempering and after tempering are given in Table 2.4.

**Table 3.4: Optic performance values and color parameters of the coated single glass with thickness of 6 mm**

| | **Prior to Tempering** | **After Tempering** |
|---|---|---|
| **Visible region light Transmittance (%)** | 68 | 68 |
| **Solar Transmittance (%)** | 46 | 46 |
| **UV Transmittance (%)** | 22 | 31 |
| **Ta** | -3,85 | -4,17 |
| **Tb** | 4,45 | 0,44 |
| **Ru,a** | -0,84 | 2,97 |
| **Ru,b** | -14,43 | -12,38 |

### Example 4

In the study realized in Example 4, in the coating layer arrangement applied to the glass surface, silicium nitride / silicium oxi-nitride is used whose thickness is increased as the final layer after chrome in order to prevent gas contamination and in order to prevent mechanical resistance and tempering problems given in other examples.

**Table - 4.1: Solar low-e coating layer arrangement**

| **Layers (material)** | | **Thickness, nm** |
|---|---|---|
| **Type** | **Chemical Formula** | |
| **Glass** | **Base Plate** | |
| **Zinc tin oxide** | ZnSnOx | 20-40 |
| **Silicium nitride** / **Silicium oxi-nitride** | SiNx/SiOxNy | 5-15 |
| **Chrome** | Cr | 1-4 |
| **Silver** | Ag | 12-18 |
| **Chrome** | Cr | 1-4 |
| **Silicium nitride / Silicium oxi-nitride** | SiNx/SiOxNy | 45-65 |

In the preferred application, the layer thicknesses given in Table 4.1 is 32 nm for ZnSnOx; it is 10 nm for SiNx/SiOxNy provided in the vicinity of ZnSnOx; it is 2 nm for Cr, it is 14.5 nm for Ag and it is 60 nm for SiNx/SiOxNy provided in the final layer. Instead of zinc tin oxide, zinc, tin or titanium oxide can be used. The accumulation parameters of the abovementioned layers are given in Table 4.2.

**Table 4.2: Coating parameters**

| | **Power : kW** | **Ar: sccm** | **O2:sccm** | **N2:scc m** | **Speed: m/min** | **Number of Passages** |
|---|---|---|---|---|---|---|
| **ZnSnOx** | 1,7 | 15 | 44 | | 1,3 | 3 |
| **SiNx/SiOxNy** | 1 | 15 | - | 16 | 0,43 | 1 |
| **Cr** | 0,4 | 50 | - | - | 2 | 1 |
| **Ag** | 0,53 | 50 | - | - | 2 | 1 |
| **Cr** | 0,4 | 50 | - | - | 2 | 1 |
| **SiNx/SiOxNy** | 1 | 15 | - | 16 | 0,43 | 6 |

The properties of the coated glass having the layer arrangement as in Table 4.1 such that the coating is placed on the second surface when ranged from the external side towards the inner side, for the 6+16ar-air+6 mm configuration prior to tempering and after tempering are given in Table 4.3.

**Table-4.3: The light and thermal performance values and color parameters for the 6+16ar-air+6 (#2) configuration of Example 4 structure prior to tempering and after tempering**

| | **Prior to tempering** | **After tempering** |
|---|---|---|
| **U - value** | 1.24 [W/(m2.K)] | 1.21 [W/(m2.K)] |
| **Visible region light Transmittance (%)** | 60 | 61 |
| **Total Solar Power Transmittance (%)** | 44 | 43 |
| **UV Transmittance (%)** | 19 | 22 |
| **Visible region reflection, inwardly (%)** | 13 | 14,7 |
| **Visible region reflection, outwardly (%)** | 18 | 19 |
| **Ta** | -3,9 | -4,76 |
| **Tb** | 3 | 0,76 |
| **Ru,a** | -0,4 | 0,98 |
| **Ru,b** | -11 | -11,05 |

Since the silicium nitride is provided in the vicinity of chrome, the oxygen, which may exist in the environment, is prevented from reaching chrome. The chrome material, provided under the silver layer, forms a suitable "seed layer" during coating, and provides firm orientation of silver and thus improves low emission property and allows the coating to be more selective. Besides, since it does not change in form after the tempering process, it continues to provide support mechanically to silver. The preservation of silver against all of the challenging effects like presence of oxygen is provided automatically thanks to the layer arrangement of the coating. Since there is no process having oxygen in the close vicinities of silver, there remains no need for gather target use which is utilized for preventing damaging of the silver layer by the oxygen applied by the process during production.

At the same time, silicium nitride is applied as the final layer, and the mechanical resistance of the final layer is provided. Moreover, the thermal stability of the SiNx/SiOxNy layer is substantially high and adsorbs very firmly to the glass and to the other layers. Thus, silicium nitride contributes tempering property of the coated glass besides the compliancy thereof with chrome. The optic performance values and color parameters of the coated single glass are given in Table 4.4.

**Table 4.4: Optic performance values and color parameters of the coated single glass with thickness of 6 mm**

| | **Prior to Tempering** | **After Tempering** |
|---|---|---|
| **Visible region light Transmittance (%)** | 69 | 69 |
| **Solar Transmittance (%)** | 46 | 45 |
| **UV Transmittance (%)** | 24 | 29 |
| **Visible region reflection, film side (%)** | 7 | 8 |
| **Visible region reflection, glass side (%)** | 14 | 16 |
| **Ta** | -3,9 | -4,76 |
| **Tb** | 3 | 0,76 |
| **Ru,a** | -0,4 | 0,98 |
| **Ru,b** | -11 | -11,05 |

As can be seen in the abovementioned tables, the optical values given in Comparative Example 1, Comparative Example 2, Comparative Example 3 and Example 4 are close to each other. However, there are great differences in terms of temper and mechanical resistance between coatings. In the glass produced by means of the arrangement given in Comparative Example 1, a particular sensitivity is formed in the coating as the zinc tin oxide and the chrome are side by side, and it does not rest to the temper in the coating. The mechanical resistance of the glass produced by means of the arrangement given in Comparative Example 2 even prior to tempering is not substantial and the ZnSnOx layer, placed under the final layer, leads to gas contamination and the materials are interacted mutually, in case there is no sufficient gas isolation between the ZnSnOx and SiNx/SiOxNy targets. By means of the arrangement given in Comparative Example 3, regional haziness occurs on the surface of glass after the tempering process and the tempering quality decreases.

When the mechanical resistances of the coating given in Example 4 are compared with the other equivalent glasses commercially available, it is seen in Table 5 that the temperability and mechanical resistance of our coating are better. The surface resistance of the coated glass after coating (prior to tempering) is 6.5 ohm/sq, and said value is decreased to 5.4 ohm/sq after the tempering. The surface resistance value decreases by 1 unit after the tempering process, and provides improvement on value U. The surface resistance property of the coating is realized by using felts which are in Erichsen band form and which have 500 gr weight in Taber 5151 Abraser device prior to tempering and after tempering.

**Table 5: Taber Test Results for Example 4**

| **NUMBER OF SCRATCHES PRIOR TO TEMPERING** | | | | | |
|---|---|---|---|---|---|
| **Number of revolutions** | **Example 4** | **Equivalent 1** | **Equivalent 2** | **Equivalent 3** | **Equivalent 4** |
| **20** | 8 | 400 | 282 | 4 | 11 |
| **40** | 10 | 800 | 410 | 11 | 32 |
| **60** | 11 | 1000 | 650 | 13 | 47 |
| **80** | 12 | 1200 | 820 | 16 | 56 |
| **100** | 14 | 1500 | 1000 | 17 | 87 |

| **NUMBER OF SCRATCHES AFTER TEMPERING** | | | | | |
|---|---|---|---|---|---|
| **Number of revolutions** | **Example 4** | **Equivalent 1** | **Equivalent 2** | **Equivalent 3** | **Equivalent 4** |
| **20** | 7 | 270 | 132 | 34 | 3 |
| **40** | 18 | 500 | 183 | 76 | 7 |
| **60** | 22 | 750 | 260 | Points and scratches on the whole surface | 25 |
| **80** | 26 | 1000 | 390 | 2 layers of points and scratches on the whole surface | 43 |
| **100** | 30 | 1200 | 482 | 3 layers of points and scratches on the whole surface | 54 |

With reference to Table 5, before tempering the glass given by Equivalent 3 and the glass given in Example 4, even if they have similar mechanical resistance, it is seen that mechanical resistance of the glass given by Equivalent 3 after tempering is substantially low. Besides, the glass given in Example 4 has higher mechanical resistance after tempering when compared with all of the equivalent glass examples in high revolution number. The usage of SiNx/SiOxNy as the final layer and in substantial thickness has an important effect on this resistance. In the conditions given in Example 4, the sputter method is used, and the scratch amounts in revolution given in Table 5 for this solar low-e coated glass having the layer arrangement coated by utilizing the sputter method show that the mechanical resistance of said glass is substantially high when compared with the equivalent glasses.

All of the layer thicknesses are determined by means of Tencor Alpha Step 500 and Daktek Surface Profiler.

## Claims

1. A double-glass unit having a coated glass where a low-e coating is applied comprising pluralities of metal, metal oxide and metal nitride by utilizing sputtering method in vacuum, **characterized by** consisting of the following layers of said low-e coating accumulated on the glass and whose thickness range is given, respectively:
| **Layers (material)** | | **Thickness, nm** |
|---|---|---|
| **Type** | **Chemical formula** | |
| **Glass** | **Base plate** | |
| Sub-oxide | Sub-oxide | 20-40 |
| Silicium nitride / Silicium oxi-nitride | SiNx/SiOxNy | 5-15 |
| Chrome | Cr | 1-4 |
| Silver | Ag | 12-18 |
| Chrome | Cr | 1-4 |
| Silicium nitride / Silicium oxi-nitride | SiNx/SiOxNy | 45-65 |
and **characterized by** consisting of zinc tin oxide as the sub-oxide.

2. A double-glass unit according to Claim 1, **characterized in that** the Cr/(SiNx/SiOxNy) structure is used as a whole such that SiNx/SiOxNy is further than the glass surface said low-e coating is applied thereto.

3. A double-glass unit according to Claim 1, **characterized in that** the coating layers are used as a whole in the sequence of (SiNx/SiOxNy)/Cr/Ag/Cr/(SiNx/SiOxNy).

4. A double-glass unit according to Claim 1, **characterized in that** after the tempering process of said glass, the visible transmittance value of the double-glass is 61 %.

5. A double-glass unit according to Claim 1, **characterized in that** after the tempering process of said glass, the total solar transmittance value of the double-glass is 43 %.

6. A double-glass unit according to Claim 1, **characterized in that** said coated glass has a maximum thickness of 6 mm.

7. A double-glass unit according to Claim 1, **characterized in that** after the tempering process of said glass, the U value of the double-glass is 1.21 [W/(m2.K)].

8. A double-glass unit according to Claim 1, **characterized in that** said sub-oxide thickness is in the range of 29-35 nm.

9. A double-glass unit according to Claim 1, **characterized in that** said silicium nitride / silicium oxi-nitride thickness provided in the vicinity of zinc tin oxide is in the range of 8-12 nm.

10. A double-glass unit according to Claim 1, **characterized in that** said chrome thicknesses are between 1-3 nm.

11. A double-glass unit according to Claim 1, **characterized in that** said silver thicknesses are between 13-16 nm.

12. A double-glass unit according to Claim 1, **characterized in that** the thickness of silicium nitride / silicium oxi-nitride thickness, which is the final layer, is between 50-60 nm.

13. A low-e coated glass which can be tempered comprising pluralities of metal, metal oxide and metal nitride layers and applied onto a glass surface by utilizing sputtering method in vacuum. Accordingly, the present invention is **characterized by** consisting of the following layers accumulated on the glass and whose thickness range is given, respectively:
| **Layers (material)** | | **Thickness, nm** |
|---|---|---|
| **Type** | **Chemical formula** | |
| **Glass** | **Base Plate** | |
| **Sub-oxide** | Sub-oxide | 20-40 |
| **Silicium nitride / Silicium oxi-nitride** | SiNx/SiOxNy | 5-15 |
| **Chrome** | Cr | 1-4 |
| **Silver** | Ag | 12-18 |
| **Chrome** | Cr | 1-4 |
| **Silicium nitride / Silicium oxi-nitride** | SiNx/SiOxNy | 45-65 |
and **characterized by** consisting of zinc tin oxide is used as the sub-oxide.

14. A low-e coating according to Claim 13, **characterized in that** the Cr(SiNx/SiOxNy) structure is used as a whole such that SiNx/SiOxNy is further than the glass surface said low-e coating is applied thereto.

15. A low-e coating according to Claim 13, **characterized in that** the coating layers are used as a whole in the sequence of (SiNx/SiOxNy)/Cr/Ag/Cr/(SiNx/SiOxNy).

## Patentansprüche

1. Eine Doppelglaseinheit mit einem beschichteten Glas, in dem eine niedrig-e-Beschichtung, die eine Vielzahl von Metallen, Metalloxiden und Metallnitriden aufweist, unter Verwendung eines Sputterverfahrens im Vakuum aufgebracht ist, **dadurch gekennzeichnet, dass** sie aus folgenden Schichten der auf dem Glas angesammelten niedrig-e-Beschichtung besteht, deren Dickenbereich jeweils angegeben ist:
| **Schichten (Material)** | | **Dicke, nm** |
|---|---|---|
| **Typ** | **Chemische Formel** | |
| **Glas** | **Grundplatte** | |
| Suboxid | Suboxid | 20-40 |
| Siliciumnitrid / Siliciumoxinitrid | SiNx/SiOxNy | 5-15 |
| Chrom | Cr | 1-4 |
| Silber | Ag | 12-18 |
| Chrom | Cr | 1-4 |
| Siliciumnitrid / Siliciumoxinitrid | SiNx/SiOxNy | 45-65 |
und **dadurch gekennzeichnet, dass** es aus Zink-Zinn-Oxid als Unteroxid besteht.

2. Doppelglaseinheit nach Anspruch 1, **dadurch gekennzeichnet, dass** die Cr / (SiNx / SiOxNy) -Struktur als Ganzes so verwendet wird, dass SiNx / SiOxNy weiter als die Glasoberfläche ist, auf die die Low-e-Beschichtung aufgebracht ist.

3. Doppelglaseinheit nach Anspruch 1, **dadurch gekennzeichnet, dass** die Überzugsschichten als Ganzes in der Reihenfolge (SiNx / SiOxNy) / Cr / Ag / Cr / (SiNx / SiOxNy) verwendet werden.

4. Doppelglaseinheit nach Anspruch 1, **dadurch gekennzeichnet, dass** nach dem Tempervorgang des Glases der Durchlässigkeitswert des Doppelglases 61 % beträgt.

5. Doppel glaseinheit nach Anspruch 1, **dadurch gekennzeichnet, dass** nach dem Tempervorgang des Glases der Gesamtsonnendurchlässigkeitswert des Doppelglases 43 % beträgt.

6. Doppelglaseinheit nach Anspruch 1, **dadurch gekennzeichnet, dass** das beschichtete Glas eine maximale Dicke von 6 mm aufweist.

7. Doppelglaseinheit nach Anspruch 1, **dadurch gekennzeichnet, dass** nach dem Tempervorgang des Glases der U-Wert des Doppelglases 1,21 [W / (m2.K)] beträgt.

8. Doppelglaseinheit nach Anspruch 1, **dadurch gekennzeichnet, dass** die Dicke des Teiloxids im Bereich von 29-35 nm liegt.

9. Doppelglaseinheit nach Anspruch 1, **dadurch gekennzeichnet, dass** die Siliciumnitrid / Siliciumoxinitrid-Dicke, die in der Nähe von Zink-Zinn-Oxid vorgesehen ist, im Bereich von 8-12 nm liegt.

10. Doppelglaseinheit nach Anspruch 1, **dadurch gekennzeichnet, dass** die Chromdicken zwischen 1-3 nm liegen.

11. Doppelglaseinheit nach Anspruch 1, **dadurch gekennzeichnet, dass** die Silberdicken zwischen 13-16 nm liegen.

12. Doppelglaseinheit nach Anspruch 1, **dadurch gekennzeichnet, daß** die Dicke der Siliziumnitrid / Siliziumoxidnitrid-Dicke, die die letzte Schicht ist, zwischen 50 und 60 nm liegt.

13. Ein niedrig-e-beschichtetes Glas, das temperiert werden kann, und mehrere Metall-, Metalloxid- und Metallnitridschichten umfasst und unter Verwendung eines Sputterverfahrens im Vakuum auf eine Glasoberfläche aufgebracht wird. Dementsprechend ist die vorliegende Erfindung **dadurch gekennzeichnet, dass** sie aus den folgenden Schichten besteht, die sich auf dem Glas angesammelt haben und deren Dickenbereich jeweils angegeben ist:
| **Schichten (Material)** | | **Dicke, nm** |
|---|---|---|
| **Typ** | **Chemische Formel** | |
| **Glas** | **Grundplatte** | |
| **Suboxid** | Suboxid | 20-40 |
| **Siliciumnitrid / Siliciumoxinitrid** | SiNx/SiOxNy | 5-15 |
| **Chrom** | Cr | 1-4 |
| **Silber** | Ag | 12-18 |
| **Chrom** | Cr | 1-4 |
| **Siliciumnitrid / Siliciumoxinitrid** | SiNx/SiOxNy | 45-65 |
und **dadurch gekennzeichnet, dass** es aus Zink-Zinn-Oxid als Unteroxid besteht.

14. Niedrig-e-Beschichtung nach Anspruch 13, **dadurch gekennzeichnet, dass** die Cr / (SiNx / SiOxNy) -Struktur als Ganzes so verwendet wird, dass SiNx / SiOxNy weiter als die Glasoberfläche ist, auf die die Low-e-Beschichtung aufgebracht ist.

15. Niedrig-e-Beschichtung nach Anspruch 13, **dadurch gekennzeichnet, dass** die Überzugsschichten als Ganzes in der Reihenfolge (SiNx / SiOxNy) / Cr / Ag / Cr / (SiNx / SiOxNy) verwendet werden.

## Revendications

1. Unité à double vitrage comprenant un verre revêtu sur lequel est appliqué un revêtement à émissivité faible comprenant des pluralités de métal, d'oxyde métallique et de nitrure de métal en utilisant un procédé de pulvérisation sous vide, **caractérisé en ce qu'**il comprend les couches suivantes dudit revêtement à faible émissivité sur le verre et dont la gamme d'épaisseur est donnée, respectivement:
| **Couches (matériel)** | | **Epaisseur, nm** |
|---|---|---|
| **Type** | **Formule chimique** | |
| **Verre** | **Plaque de base** | |
| Sous-oxyde | Sous-oxyde | 20-40 |
| Nitrure de silicium / oxyde de nitrure de silicium | SiNx/SiOxNy | 5-15 |
| Chrome | Cr | 1-4 |
| Argent | Ag | 12-1 8 |
| Chrome | Cr | 1-4 |
| Nitrure de silicium / oxyde de nitrure de silicium | SiNx/SiOxNy | 45-65 |
et **caractérisé en ce qu'**il comprend de l'oxyde de zinc et d'étain en tant que sous-oxyde.

2. Unité à double vitrage selon la revendication 1, **caractérisée en ce que** la structure Cr/(SiNx/SiOxNy) est utilisée dans son ensemble de manière à ce que SiNx/SiOxNy soit plus loin que la surface du verre où ledit revêtement à faible émissivité lui est appliqué.

3. Unité à double vitrage selon la revendication 1, **caractérisée en ce que** les couches de revêtement sont utilisées dans son ensemble dans la séquence de (SiNx/SiOxNy)/Cr/Ag/ Cr/(SiNxtSiOxNy).

4. Unité à double vitrage selon la revendication 1, **caractérisée en ce qu'**après le processus de recuit dudit vitrage, la valeur de transmittance visible du double vitrage est de 61%.

5. Unité à double vitrage selon la revendication 1, **caractérisée en ce qu'**après le processus de recuit dudit verre, la valeur totale de transmittance solaire du double vitrage est de 43%.

6. Unité à double vitrage selon la revendication 1, **caractérisée en ce que** ledit verre revêtu a une épaisseur maximale de 6 mm.

7. Unité à double vitrage selon la revendication 1, **caractérisée en ce qu'**après le processus de recuit dudit verre, la valeur U du double vitrage est de 1,21 [W/(m2.K)].

8. Unité à double vitrage selon la revendication 1, **caractérisée en ce que** l'épaisseur dudit sous-oxyde est comprise entre 29 et 35 nm.

9. Unité à double vitrage selon la revendication 1, **caractérisée en ce que** l'épaisseur dudit nitrure de silicium/oxyde de nitrure de silicium prévue à proximité de l'oxyde d'étain-zinc est comprise entre 8 et 12 nm.

10. Unité à double vitrage selon la revendication 1, **caractérisée en ce que** lesdites épaisseurs de chrome sont comprises entre 1 à 3 nm.

11. Unité à double vitrage selon la revendication 1, **caractérisée en ce que** lesdites épaisseurs d'argent sont comprises entre 13 et 16 nm.

12. Unité à double vitrage selon la revendication 1, **caractérisée en ce que** l'épaisseur de nitrure de silicium/oxyde de nitrure de silicium qui est la couche finale, est comprise entre 50 et 60 nm.

13. Un verre revêtu à faible émissivité qui peut être trempé, comprenant des couches multiples de métal, d'oxyde de métal et des couches de nitrure de métal et appliqué sur une surface de verre en utilisant une méthode de pulvérisation sous vide. Par conséquence, la présente invention est **caractérisée en ce qu'**elle comprend les couches suivantes accumulées sur le verre et dont la gamme d'épaisseur est donnée, respectivement:
| **Couches (matériel)** | | Epaisseur, nm |
|---|---|---|
| **Type** | **Formule chimique** | |
| **Verre** | **Plaque de base** | |
| **Sous-oxyde** | Sous-oxyde | 20-40 |
| **Nitrure de Silicium** / **oxyde de nitrure de silicium** | SiNx/SiOxNy | 5-15 |
| **Chrome** | Cr | 1-4 |
| **Argent** | Ag | 12-18 |
| **Chrome** | Cr | 1-4 |
| **Nitrure de Silicium / oxyde de nitrure de silicium** | SiNx/SiOxNy | 45-65 |
et **caractérisé en ce qu'**il comprend de l'oxyde de zinc et d'étain utilisé comme sous-oxyde.

14. Revêtement à faible émissivité selon la revendication 13, **caractérisé en ce que** la structure de Cr (SiNx/SiOxNy) est utilisée dans son ensemble de manière à ce que SiNx/SiOxNy soit plus loin que la surface du verre où ledit revêtement à faible émissivité lui est appliqué.

15. Revêtement à faible émissivité selon la revendication 13, **caractérisé en ce que** les couches de revêtement sont utilisées dans leur ensemble dans la séquence de (SiNx/SiOxNy)/Cr/Ag/Cr/(SiNx/SiOxNy).
